# EUROPÄISCHE PATENTSCHRIFT

(11) **EP 3 596 354 B1**
(45) Veröffentlichungstag und Bekanntmachung des Hinweises auf die Patenterteilung: **07.06.2023**
(21) Anmeldenummer: 18712524.0
(22) Anmeldetag: 12.03.2018
(51) Int. Cl.: F16D 55/226, F16D 65/097, F16D 55/227

(54) **BREMSTRÄGER UND SCHEIBENBREMSE**
BRAKE CARRIER AND DISC BRAKE
SUPPORT DE FREIN ET FREIN À DISQUE

(30) Priorität: 16.03.2017 DE 102017105641
(43) Veröffentlichungstag der Anmeldung: 22.01.2020
(73) Patentinhaber: KNORR-BREMSE Systeme für Nutzfahrzeuge GmbH, 80809 München (DE)
(72) Erfinder: FISCHL, Tobias, 80336 München (DE); SCHROPP, Josef, 94428 Eichendorf (DE); PETSCHKE, Andreas, 94127 Neuburg am Inn (DE)
(86) Internationale Anmeldenummer: PCT/EP2018/056020
(87) Internationale Veröffentlichungsnummer: WO 2018/166945

(56) Entgegenhaltungen:
- US-A1- 2004 222 050
- US-B1- 8 544 614

## Beschreibung

Die vorliegende Erfindung betrifft einen Bremsträger für eine pneumatische oder elektromotorisch betätigbare Scheibenbremse eines Nutzfahrzeugs gemäß dem Oberbegriff des Anspruchs 1 sowie eine Scheibenbremse gemäß dem Oberbegriff des Anspruchs 8.

Gattungsgemäße Bremsträger für pneumatisch oder elektromotorisch betätigbare Scheibenbremsen von Nutzfahrzeugen weisen im Wesentlichen einen Anbindungsbereich auf, der der Festlegung an einer Fahrzeugachse, beispielsweise durch Verschrauben an einem Achsflansch einer solchen Fahrzeugachse, sowie einen Belagschacht zur Aufnahme und Abstützung wenigstens eines Bremsbelags. Der Belagschacht wird dabei durch eine Brücke mit Auflageflächen zur radialen Abstützung des Bremsbelags und aus dieser vorstehenden Trägerhörnern gebildet, wobei die Trägerhörner den jeweiligen Bremsbelag seitlich führen und bei einem Bremsvorgang die von einer Bremsscheibe auf den Bremsbelag übertragenen Bremskräfte aufnehmen. Bekannt sind auch die Bremsscheibe übergreifende Bremsträger mit zwei Belagschächten zur Aufnahme eines zuspannseitigen Bremsbelags und eines reaktionsseitigen Bremsbelags.

Als zuspannseitiger Bremsbelag ist der Bremsbelag definiert, der unmitttelbar von Druckstücken einer Zuspanneinheit der Scheibenbremse angetrieben wird. Als reaktionsseitiger Bremsbelag ist der Bremsbelag definiert, der nach dem Andrücken des zuspannseitigen Bremsbelags an die Bremsscheibe durch Bewegung des Bremssattels an die reaktionseitige Reibfläche der Bremsscheibe angedrückt wird.

Zur Montage eines Bremsbelags in einem solchen Belagschacht eines Bremsträgers wird der Bremsbelag radial zur Drehachse der Bremsscheibe, entlang der Innenflächen der Trägerhörner in den Belagschacht eingeführt. Sind die Innenflächen der Trägerhörner eben ausgeführt und die Geometrie des Belagschachts im Wesentlichen rechteckig, ist dadurch ein sehr einfaches Einführen des Bremsbelags von oben durch eine Belagschachtöffnung eines Bremssattels der Scheibenbremse direkt in den Belagschacht ermöglicht.

Eine solche Anordnung bedingt jedoch ein zusätzliches Halte- bzw. Sicherungssystem des Belages bzw. der Bremsbeläge, insbesondere zur radialen Fixierung der Bremsbeläge um sie gegen ein Herausfallen zu sichern, beispielsweise in Gestalt eines die Belagschachtöffnung des Bremssattels in Richtung der Drehachse der Bremsscheibe übergreifenden Belaghaltebügels.

Im Falle eines Bremsträgers, bei dem die Trägerhörner derart gestaltet sind, dass die Bremsbeläge an beiden der Trägerhörner radial formschlüssig fixiert sind, ist es erforderlich, die Bremsbeläge zunächst axial in Richtung Fahrzeugachse parallel zum Belagschacht zu bewegen, bis jeweilige Vorsprünge an den Seitenwänden der Bremsbeläge und entsprechende Ausnehmungen an den Innenseiten der Trägerhörner des Bremsträgers in Überdeckung kommen, so dass der Bremsbelag eine Einschiebeposition erreicht, in der der Bremsbelag anschließend in Richtung der Drehachse der Bremsscheibe in den Belagschacht eingeschoben werden kann. Ein solcher Bremsträger ist beispielsweise aus der DE 10 2015 114 351 A1 bekannt.

Problematisch bei der Montage insbesondere des durch die Scheibenbremse verdeckten zuspannseitigen Bremsbelags ist es, die Positionierung der Bremsbeläge beim Einbauvorgang möglichst einfach und schnell durchführen zu können.

Aus der US 8 544 614 B1 ist ein Bremsträger und eine Bremsscheibe bekannt, bei der an einer Seitenfläche der gegenüberliegenden Trägerhörner zur Aufnahme eines Bremsbelags jeweilige parallel zueinander verlaufende Führungskonturen zur Führung des Bremsbelags in eine Einschiebeposition seitlich des Belagschachts angeordnet sind, so dass der Bremsbelag nach dem Einführen entlang dieser Führungskonturen in die Einschiebeposition axial zur Fahrzeugsachse in den Belagschacht zwischen die Trägerhörner einschiebbar ist.

Problematisch ist hier, dass es beim Einführen des Bremsbelags entlang der Führungskonturen leicht zu einem Verkanten kommen kann, was den Einbauvorgang wiederum erschwert.

Aufgabe der vorliegenden Erfindung ist es, einen Bremsträger und eine Scheibenbremse bereitzustellen, mit der der Einbau von Bremsbelägen weiter vereinfacht wird.

Diese Aufgabe wird durch einen Bremsträger mit den Merkmalen des Anspruchs 1 sowie durch eine Scheibenbremse mit den Merkmalen des Anspruchs 8 gelöst.

Der erfindungsgemäße Bremsträger für eine pneumatisch oder elektromotorisch betätigbare Scheibenbremse eines Nutzfahrzeugs weist einen Anbindungsbereich zur Festlegung an einer Fahrzeugachse auf, wenigstens einen Belagschacht zur Aufnahme und Abstützung wenigstens eines Bremsbelages.

Der Belagschacht wird durch ein einlaufseitiges Trägerhorn, ein auslaufseitiges Trägerhorn und eine das einlaufseitige Trägerhorn und das auslaufseitige Trägerhorn verbindende Brücke gebildet. Dabei bilden an die Trägerhörner angrenzende Bereiche der Brücke Auflageflächen zur radialen Abstützung des Bremsbelags.

An einer Seitenfläche der Trägerhörner sind jeweilige Führungskonturen zur Führung des Bremsbelags in eine Einschiebeposition seitlich des Belagschachts angeordnet, in der der Bremsbelag axial zur Fahrzeugsachse in den Belagschacht zwischen die Trägerhörner einschiebbar ist.

Die Führungskonturen sind dabei so geformt, dass sie zur Brücke hin aufeinander zulaufend geformt sind.

Mit einem derartigen Bremsträger ist eine erleichterte Ausrichtung eines in den Belagschacht des Bremsträgers einzuführenden Bremsbelags ermöglicht, da durch die Führungskontur eine exakt mittige Positionierung des Bremsbelags erzwungen wird.

Wird der Bremsbelag beim Einschieben in radialer Richtung zunächst seitlich verschoben angesetzt, stößt eine Seitenkante einer Belagträgerplatte des Bremsbelags an die Führungskontur an und wird entlang der Führungskontur in seine korrekte Einschiebeposition geführt.

Vorteilhafte Ausführungsvarianten der Erfindung sind Gegenstand der Unteransprüche.

Gemäß einer vorteilhaften Ausführungsvariante des erfindungsgemäßen Bremsträgers sind die Auflageflächen zur radialen Abstützung des wenigstens eines Bremsbelags seitlich um einen Montagebereich zur Begrenzung der Schiebebewegung des Bremsbelags in die Einschiebeposition seitlich des Belagschachts vergrößert. Dies ermöglicht in einfacher Weise das Einschieben des Bremsbelags in die Einschiebeposition, bei der der Bremsbelag parallel zur Drehachse der Bremsscheibe in dem Belagschacht vorgeschoben werden kann.

Die Führungskonturen sind gemäß einer bevorzugten Ausführungsvariante der Erfindung als Materialverdickung der Trägerhörner an den Seitenflächen der Trägerhörner angeformt. Die Führungskonturen sind so in einfacher Weise beim Gießprozess des Bremsträgers an den Trägerhörnern anformbar.

Besonders bevorzugt weisen die die Führungskonturen jeweils wenigstens einen geradlinigen Führungsbereich auf, der ermöglicht, dass der jeweilige Bremsbelag bei anfänglich seitlich verschobener Positionierung in die exakte mittige Position geführt werden kann.

Im Falle eines Bremsträgers, bei dem an jeweiligen Innenseiten der Trägerhörner Vorsprünge angeformt sind, die der radialen Sicherung des Bremsbelags mit entsprechend geformter Belagträgerplatte mit seitlichen Ausnehmungen dienen, sind bevorzugt unterhalb der Vorsprünge jeweils eine Aufnahme zur Aufnahme eines jeweiligen Vorsprungs der Belagträgerplatte angeformt, wobei die Führungskonturen jeweils an einem Seitenrand der jeweiligen Aufnahme enden.

Dadurch kann der Bremsbelag entlang einer der Führungskonturen stets in die korrekte Einschiebeposition geführt werden.

Die erfindungsgemäße Scheibenbremse weist einen eine Bremsscheibe übergreifenden, verschiebbaren Bremssattel auf, beidseitig der Bremsscheibe in einem Belagschacht eines Bremsträgers angeordnete Bremsbeläge mit einer Belagträgerplatte und einem an dieser befestigten Reibbelag.

Die Bremsbeläge sind einlaufseitig und auslaufseitig radial zur Drehachse der Bremsscheibe formschlüssig an Trägerhörnern des Bremsträgers gehalten, wobei der Bremsträger wie oben beschrieben ausgebildet ist.

Bevorzugt weisen ausschließlich die zuspannseitigen Trägerhörner die Führungskonturen zur Führung des Bremsbelags in eine Einschiebeposition seitlich des Belagschachts auf.

Insbesondere bei der Montage der zuspannseitigen Bremsbeläge ist im Regelfall die exakte Ausrichtung durch Sichtbehinderung durch die Bremsscheibe erschwert, so dass hier die erfindungsgemäßen Führungskonturen die Montage deutlich erleichtern.

Nachfolgend werden bevorzugte Ausführungsbeispiele anhand der beiliegenden Figuren näher erläutert. Es zeigen:
- Fig. 1: eine perspektivische Darstellung einer ersten Ausführungsvariante eines erfindungsgemäßen Bremsträgers und eines Bremsbelags vor der Montage,
- Fig. 2: eine perspektivische Detailansicht des Bremsträgers aus Fig. 1 mit teilweise radial eingeschobenem Bremsbelag,
- Fig. 3: eine perspektivische Detailansicht des Bremsbelags und des Bremsträgers aus Fig. 1 mit radial vollständig eingeschobenem Bremsbelag vor der Axialverschiebung in den Belagschacht,
- Fig. 4: eine der Fig. 3 entsprechende Ansicht bei in den Belagschacht eingeschobenem Bremsbelag,
- Fig. 5: eine Draufsicht auf den Bremsträger aus Fig. 1,
- Fig. 6: eine perspektivische Ansicht einer alternativen Ausführungsvariante eines Bremsträgers und
- Fig. 7: eine perspektivische Detailansicht des Bremsträgers aus Fig. 6.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bremsträgers, des Bremsbelags, des Trägerhorns, der Brücke, der Führungskontur und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

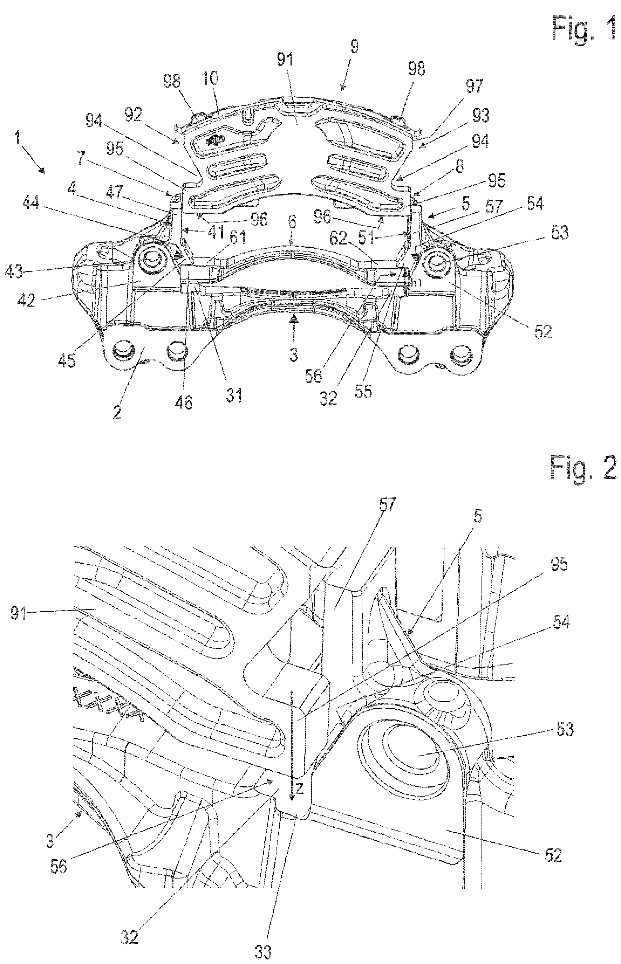

In **Fig. 1** ist mit dem Bezugszeichen 1 ein Bremsträger für eine pneumatisch oder elektromotorisch betätigbare Scheibenbremse eines Nutzfahrzeugs bezeichnet.

Der Bremsträger 1 weist einen Anbindungsbereich 2 auf, der der Festlegung an einer Fahrzeugachse dient, beispielsweise durch Verschrauben mit einem Achsflansch einer Fahrzeugachse des Nutzfahrzeugs.

Oberhalb des Anbindungsbereiches 2 ist ein Belagschacht angeformt, der der Aufnahme und Abstützung wenigstens eines Bremsbelages 9 dient.

Der hier gezeigte Bremsträger 1 weist dabei zwei solcher Belagschächte auf. Der Bremsträger 1 ist dabei so ausgebildet, dass er eine (nicht dargestellte) Bremsscheibe der Scheibenbremse übergreift und so beidseits der Bremsscheibe jeweils ein Belagschacht zur Aufnahme eines Bremsbelags 9 angeformt ist.

Jeder der Belagschächte wird dabei durch ein einlaufseitiges Trägerhorn 4, 7, ein auslaufseitiges Trägerhorn 5, 8 und eine das einlaufseitige Trägerhorn 4, 7 mit dem auslaufseitigen Trägerhorn 5, 8 verbindenden Brücke 3, 6 gebildet.

Die Trägerhörner 4, 5 und die Brücke 3 bezeichnen dabei die Zuspannseite. Entsprechend ist auf der Reaktionsseite des Bremsträgers 1 ein einlaufseitiges Trägerhorn 1, ein auslaufseitiges Trägerhorn 8 und eine Brücke 6 angeformt.

In der weiteren Beschreibung wird die Ausbildung des Belagschachts auf der Zuspannseite näher beschrieben.

Der Belagschacht der Reaktionsseite kann dabei in gleicher Weise ausgeführt sein. Denkbar ist aber auch, den reaktionsseitigen Belagschacht zumindest geringfügig zu dem zuspannseitigen Belagschacht verschieden auszubilden.

Die an die Trägerhörner 4, 5 angrenzenden Bereiche der Brücke 3 bilden Auflageflächen 31, 32, die der radialen Abstützung des Bremsbelags 9 dienen, wobei eine Unterseite 96 des Bremsbelags im eingeschobenen Zustand auf den Auflageflächen 31, 32 aufliegt. Auch die Brücke 6 der Reaktionsseite des Bremsträgers 1 weist solche Auflageflächen 61, 62 auf.

Auf der der Unterseite 96 gegenüberliegenden Oberseite des Bremsbelags 9 ist bevorzugt eine Belaghaltefeder 10 gehalten. Die Belaghaltefeder 10 ist dabei vorzugsweise an den äußeren Rändern der Oberseite einer Belagträgerplatte 91 des Bremsbelags 9 an Haltenasen 98 fixiert.

Die Trägerhörner 4, 5 weisen jeweils eine dem Belagschacht zugewandte Innenseite 41, 51 auf, gegen die sich im montierten Zustand des Bremsbelags zumindest Abschnitte von Seitenflächen 92, 93 der Belagträgerplatte 91 des Bremsbelags 9 wie die in Figur 1 gezeigten Anlageflächen 97 abstützen.

An einer von der Bremsscheibe abgewandten Seitenfläche 42, 52 der Trägerhörner 4, 5 sind jeweilige Führungskonturen 44, 54 angeordnet, die der Führung des Bremsbelags 9 in eine Einschiebeposition seitlich des Belagschachts dienen. Als Einschiebeposition wird dabei die Position bezeichnet, in der der Bremsbelag 9 axial zur (nicht gezeigten) Fahrzeugachse bzw. zur Drehachse der Bremsscheibe in den Belagschacht zwischen die Trägerhörner 4, 5 einschiebbar ist.

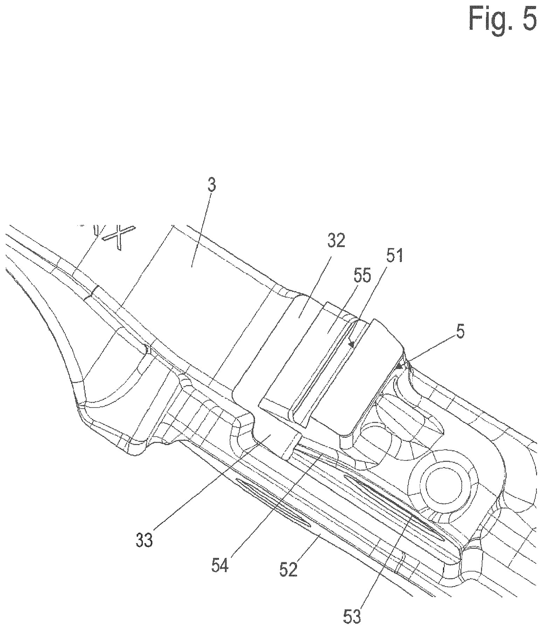

Diese Führungskonturen 44, 54 sind, wie in den **Fig. 2 bis 5** gezeigt, bevorzugt als Materialverdickung der Trägerhörner 4, 5 an den Seitenflächen 42, 52 der Trägerhörner 4, 5 angeformt.

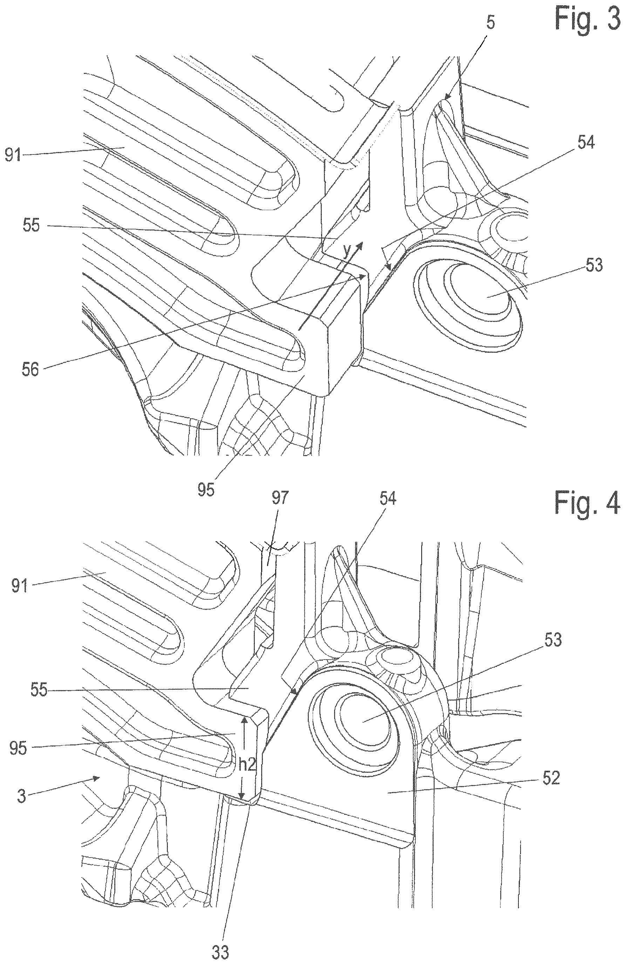

Dadurch ist ermöglicht, dass ein in radialer Richtung in Richtung z der Drehachse der Bremsscheibe entlang einer Seitenfläche 47, 57 eines Holmstücks des Trägerhorns 4, 5 entlanggeführten Belagträgerplatte 91, die beim radialen Einführen nicht exakt, sondern seitlich versetzt bewegt wird, bei der radialen Bewegung in Richtung z mit einer Unterkante an die Führungskontur 44, 54 anstößt und entlang dieser in seine zentrierte Position geführt wird, bis der Bremsbelag 9, wie in **Fig. 3** dargestellt, auf einem Montagebereich 33 aufsetzt.

Der Montagebereich 33 definiert eine zusätzliche Auflagefläche der jeweiligen Auflageflächen 31, 32 der an die Trägerhörner 4, 5 angrenzenden Bereiche der Brücke 3, der dazu geschaffen ist, ein Verschieben des Bremsbelag 9 an dem Belagschacht vorbei zu weit in Richtung der Drehachse der Bremsscheibe zu verhindern.

Anstelle der Anformung der Führungskonturen 44, 54 an die Seitenflächen der Trägerhörner 4, 5 ist es prinzipiell auch denkbar, diese Führungskonturen 44, 54 als separate, beispielsweise plattenförmige Bauteile am jeweiligen Trägerhorn zu befestigen.

Die zuspannseitigen Seitenflächen 42, 52 der Trägerhörner 4, 5 weisen des Weiteren Aufnahmebohrungen 43, 53 auf, die der Schiebelagerung eines nicht gezeigten Bremssattels dienen.

Wie in den Fig. 1-5 des Weiteren gezeigt ist, sind die Führungskonturen 44, 54 der Trägerhörner 4, 5 eines Belagschachts zur Brücke 3 hin aufeinander zu laufend geformt.

So weisen die Führungskonturen 44, 54, wie besonders gut in den Fig. 2 - 4 zu erkennen ist, zwei winklig zueinander stehende geradlinige Bereiche auf.

Ein erster geradliniger Bereich ist dabei winklig zur Einschubrichtung z ausgerichtet und dient der Führung des Bremsbelags 9 in seine zentrale Position zwischen den Trägerhörnern 4, 5.

Ein zweiter geradliniger Bereich ist radial, d.h. in Einschubrichtung z ausgerichtet, so dass der Bremsbelag 9 nach Erreichen des Montagebereichs 33 axial zur Drehachse der Bremsscheibe in einer Einschubrichtung y zwischen die Trägerhörner 4, 5 einschiebbar ist.

Bei der in den Fig. 1-5 gezeigten Variante des Bremsträgers 1 sind an jeweiligen Innenseiten 41, 51 der Trägerhörner 4, 5 Vorsprünge 45, 55 angeformt, die der radialen Sicherung des Bremsbelags 9 mit entsprechend geformter Belagträgerplatte 91 mit seitlichen Ausnehmungen 94 dient.

Unterhalb der Vorsprünge 45, 55 der Trägerhörner 4, 5 ist jeweils eine Aufnahme 46, 56 zur Aufnahme eines jeweiligen Vorsprungs 95 der Belagträgerplatte 91 angeformt, wobei die Führungskonturen 44, 54 jeweils an einem Seitenrand der jeweiligen Aufnahme 46, 56 enden. Die Höhe h₂ der Vorsprünge 95 entspricht dabei vorzugsweise der Höhe h₁ der Aufnahmen 46, 56 der Trägerhörner 4, 5, so dass der Bremsbelag radial in den Aufnahmen 46, 56 fixiert ist.

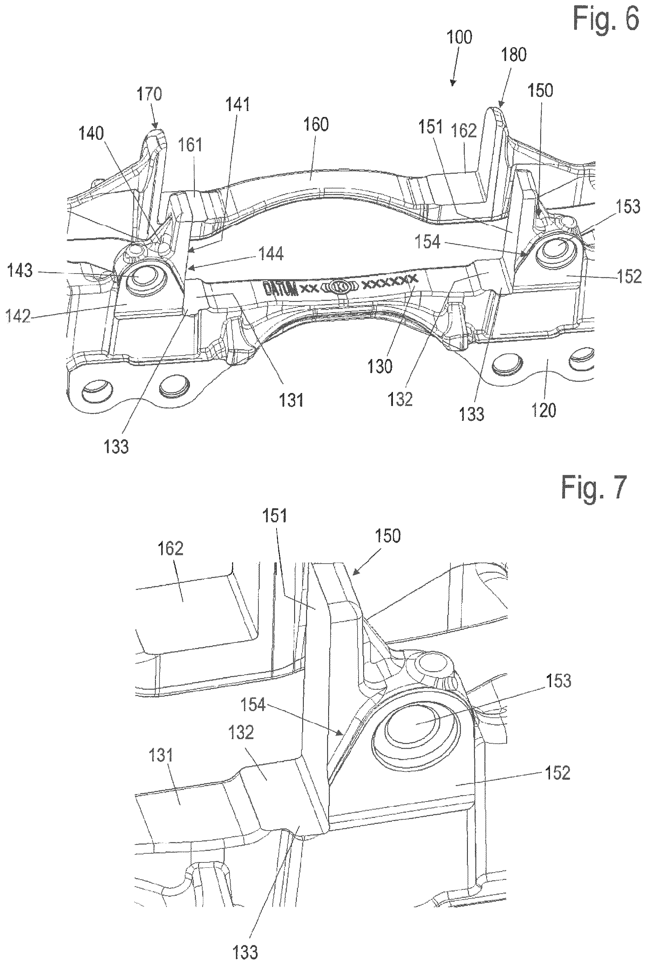

Bei der in den **Fig. 6 und 7** gezeigten alternativen Ausführungsvariante eines Bremsträgers 100 sind die Führungskonturen 144, 154 in gleicher Weise wie anhand des zuvor beschriebenen Bremsträgers 1 ausgeführt.

Wesentlicher Unterschied dieses Bremsträgers 100 zu dem zuvor beschriebenen Bremsträger 1 sind die geradlinigen Innenflächen 141, 151 der Trägerhörner 140, 150, so dass bei einem solchermaßen ausgebildeten Bremsträger 100 neben dem direkten Einführen des Bremsbelags 9 zwischen die Trägerhörner 140, 150 auch ein seitlich versetztes Einschieben des Bremsbelags 9 in einfacher Weise möglich ist, da die exakte mittige Ausrichtung des Bremsbelags 9 auch hier durch die Führungskonturen 144, 154 und den Montagebereich 131 an den Auflageflächen 131, 132 der Brücke 130 vereinfacht ist.

Auch der Bremsträger 100 ist in der hier gezeigten Ausführungsvariante so ausgeführt, dass er eine (nicht dargestellte) Bremsscheibe übergreift, so dass die Trägerhörner 140, 150 und die Brücke 130 einen zuspannseitigen Belagschacht bilden und die Trägerhörner 170, 180 und die Brücke 160 einen reaktionsseitigen Belagschacht ausbilden.

Besonders bevorzugt sind ausschließlich die zuspannseitigen Trägerhörner 4, 5, 140, 150 mit solchen Führungskonturen 44, 54, 144, 154 zur Führung eines Bremsbelags 9 in einer Einschiebeposition seitlich des Belagschachts ausgebildet.

Die reaktionsseitigen Trägerhörner 7, 8, 170, 180 sind bevorzugt ohne solche Führungskonturen ausgebildet. Ebenso sind die Auflageflächen 61, 62, 161, 162 der reaktionsseitigen Brücken 6, 160 so ausgebildet, dass deren Breite in Richtung der Drehachse der Bremsscheibe der Breite der Trägerhörner 7, 8, 170, 180 entspricht.

### Bezugszeichenliste

- 1: Bremsträger
- 2: Anbindungsbereich

- 3: Brücke
- 31: Auflagefläche
- 32: Auflagefläche
- 33: Montagebereich

- 4: Trägerhorn
- 41: Innenseite
- 42: Seitenfläche
- 43: Aufnahmebohrung
- 44: Führungskontur
- 45: Vorsprung
- 46: Aufnahme

- 5: Trägerhorn
- 51: Innenseite
- 52: Seitenfläche
- 53: Aufnahmebohrung
- 54: Führungskontur
- 55: Vorsprung
- 56: Aufnahme

- 6: Brücke
- 61: Auflagefläche
- 62: Auflagefläche

- 7: Trägerhorn
- 8: Trägerhorn

- 9: Bremsbelag
- 91: Belagträgerplatte
- 92: Seitenfläche
- 93: Seitenfläche
- 94: Ausnehmung
- 95: Vorsprung
- 96: Unterkante
- 97: Anlagefläche
- 98: Haltenase

- 10: Belaghaltefeder

- 100: Bremsträger
- 120: Anbindungsbereich

- 130: Brücke
- 131: Auflagefläche
- 132: Auflagefläche
- 133: Montagebereich

- 140: Trägerhorn
- 141: Innenseite
- 142: Seitenfläche
- 143: Aufnahmebohrung
- 144: Führungskontur

- 150: Trägerhorn
- 151: Innenseite
- 152: Seitenfläche
- 153: Aufnahmebohrung
- 154: Führungskontur

- 160: Brücke
- 161: Auflagefläche
- 162: Auflagefläche

- 170: Trägerhorn
- 180: Trägerhorn

- h₁: Höhe des Vorsprungs
- h₂: Höhe des Ausnehmung

## Patentansprüche

1. Bremsträger (1, 100) für eine pneumatisch oder elektromotorisch betätigbare Scheibenbremse eines Nutzfahrzeugs, aufweisend
- einen Anbindungsbereich (2, 120) zur Festlegung an einer Fahrzeugachse ,
- wenigstens einen Belagschacht zur Aufnahme und Abstützung wenigstens eines Bremsbelags (9),
- wobei der Belagschacht durch ein einlaufseitiges Trägerhorn (4,140), ein auslaufseitiges Trägerhorn (5, 150) und eine das einlaufseitige Trägerhorn (4, 140) und das auslaufseitige Trägerhorn (5, 150) verbindende Brücke (3, 130) gebildet wird,
- wobei an die Trägerhörner (4, 5, 140, 150) angrenzende Bereiche der Brücke (3, 130) Auflageflächen (31, 32, 131, 132) zur radialen Abstützung des wenigstens eines Bremsbelags (9) bilden,
- wobei an einer Seitenfläche (42, 52, 142, 152) der Trägerhörner (4, 5, 140, 150) jeweilige Führungskonturen (44, 54, 144, 154) zur Führung des Bremsbelags (9) in eine Einschiebeposition seitlich des Belagschachts angeordnet sind, in der der Bremsbelag (9) axial zur Fahrzeugsachse in den Belagschacht zwischen die Trägerhörner (4, 5, 140, 150) einschiebbar ist,
**dadurch gekennzeichnet, dass**
- die Führungskonturen (44, 54, 144, 154) der Trägerhörner (4, 5, 140, 150) eines Belagschachts zur Brücke (3, 130) hin aufeinander zu laufend geformt sind.

2. Bremsträger (1, 100) nach Anspruch 1, **dadurch gekennzeichnet, dass** die Auflageflächen (31, 32, 131, 132) zur radialen Abstützung des wenigstens eines Bremsbelags (9) seitlich um einen Montagebereich (33) zur Begrenzung der Schiebebewegung des Bremsbelags in die Einschiebeposition seitlich des Belagschachts vergrößert sind.

3. Bremsträger (1, 100) nach Anspruch 1 oder 2, **dadurch gekennzeichnet, dass** Führungskonturen (44, 54, 144, 154) als Materialverdickung der Trägerhörner (4, 5, 140, 150) an den Seitenflächen (42, 52, 142, 152) der Trägerhörner (4, 5, 140, 150) angeformt sind.

4. Bremsträger (1, 100) nach einem der vorstehenden Ansprüche, **dadurch gekennzeichnet, dass** die Führungskonturen (44, 54, 144, 154) jeweils wenigstens einen geradlinigen Führungsbereich aufweisen.

5. Bremsträger (1, 100) nach Anspruch 4, **dadurch gekennzeichnet, dass** ein erster geradliniger Führungsbereich winklig zur Ebene der Innenseite (41, 51) der Trägerhörner (4, 5) ausgerichtet ist und ein zweiter geradliniger Führungsbereich in der Ebene der Innenseite (41, 51) des jeweiligen Trägerhorns (4, 5) liegt.

6. Bremsträger (1, 100) nach einem der vorstehenden Ansprüche, **dadurch gekennzeichnet, dass** an jeweiligen Innenseiten (41, 51) der Trägerhörner (4, 5) Vorsprünge (45, 55) angeformt sind, zur radialen Sicherung des Bremsbelags (9) mit entsprechend geformter Belagträgerplatte (91) mit seitlichen Ausnehmungen (94).

7. Bremsträger (1, 100) nach Anspruch 6, **dadurch gekennzeichnet, dass** unterhalb der Vorsprünge (45, 55) jeweils eine Aufnahme (46, 56) zur Aufnahme eines jeweiligen Vorsprungs (95) der Belagträgerplatte (91) angeformt ist, wobei die Führungskonturen (44, 54) jeweils an einem Seitenrand der jeweiligen Aufnahme (46, 56) enden.

8. Pneumatisch oder elektromotorisch betätigbare Scheibenbremse eines Nutzfahrzeugs, mit einem eine Bremsscheibe übergreifenden, verschiebbaren Bremssattel, beidseitig der Bremsscheibe in einem Belagschacht eines Bremsträgers (1, 100) angeordneten Bremsbelägen (9) mit einer Belagträgerplatte (91) und einem an dieser befestigten Reibbelag, wobei die Bremsbeläge (9) einlaufseitig und auslaufseitig radial zur Drehachse der Bremsscheibe formschlüssig an Trägerhörnern (4, 5, 140, 150) des Bremsträgers (1, 100) gehalten sind, **dadurch gekennzeichnet, dass** der Bremsträger (1, 100) gemäß einem der vorstehenden Ansprüche ausgebildet ist.

9. Scheibenbremse nach Anspruch 8, **dadurch gekennzeichnet, dass** ausschließlich die aktionsseitigen Trägerhörner (4, 5, 140, 150) die Führungskonturen (44, 54, 144, 154) zur Führung des Bremsbelags (9) in eine Einschiebeposition seitlich des Belagschachts aufweisen.

## Claims

1. A brake carrier (1, 100) for a pneumatically or electromotively actuated disc brake of a utility vehicle, comprising:
- a connecting region (2, 120) for fixing to a vehicle axle;
- at least one pad shaft for receiving and supporting at least one brake pad (9);
- this pad shaft being formed by a run-in-side carrier horn (4, 140), a run-out-side carrier horn (5, 150) and a bridge (3, 130) that connects the run-in-side carrier horn (4, 140) and the run-out-side carrier horn (5, 150);
- regions of this bridge (3, 130) adjacent to the carrier horns (4, 5, 140, 150) forming bearing surfaces (31, 32, 131, 132) for providing radial support for the at least one brake pad (9);
- there being arranged on a lateral face (42, 52, 142, 152) of the carrier horns (4, 5, 140, 150) guide contours (44, 54, 144, 154) for guiding the brake pad (9) into an insertion position to the side of the pad shaft in which the brake pad (9) can be inserted into the pad shaft between the carrier horns (4, 5, 140, 150) axially in relation to the vehicle axle;
**characterised in that**
- the guide contours (44, 54, 144, 154) of the carrier horns (4, 5, 140, 150) of a pad shaft are formed continuously one on top of another towards the bridge (3, 130).

2. A brake carrier (1, 100) according to claim 1, **characterised in that** the bearing surfaces (31, 32, 131, 132) for providing radial support for the at least one brake pad (9) are enlarged laterally by a mounting region (33) in order to limit the sliding movement of the brake pad into the insertion position to the side of the pad shaft.

3. A brake carrier (1, 100) according to claim 1 or 2, **characterised in that** the guide contours (44, 54, 144, 154) are integrally formed on the lateral faces (42, 52, 142, 152) of the carrier horns (4, 5, 140, 150) to increase the material thickness of the carrier horns (4, 5, 140, 150).

4. A brake carrier (1, 100) according to any one of the preceding claims, **characterised in that** the guide contours (44, 54, 144, 154) each have at least one rectilinear guide region.

5. A brake carrier (1, 100) according claim 4, **characterised in that** a first rectilinear guide region is oriented at an angle to the plane of the inner face (41, 51) of the carrier horns (4, 5) and a second rectilinear guide region lies in the plane of the inner face (41, 51) of the carrier horns (4, 5).

6. A brake carrier (1, 100) according to any one of the preceding claims, **characterised in that** projections (45, 55) are integrally formed on the inner faces (41, 51) of the carrier horns (4, 5) in order to radially secure the brake pad (9) with the correspondingly formed pad carrier plate (91) with lateral recesses (94).

7. A brake carrier (1, 100) according to claim 6, **characterised in that** integrally formed beneath each of the projections (45, 55) is a receiver (46, 56) for receiving a projection (95) of the pad carrier plate (91), the guide contours (44, 54) ending at a lateral edge of the receiver (46, 56).

8. A pneumatically or electromotively actuated disc brake of a utility vehicle having a sliding brake calliper that fits over a brake disc, brake pads (9) that are arranged in a pad shaft of a brake carrier (1, 100) on either side of the brake disc and have a brake carrier plate (91), and a friction pad that is fixed to this brake carrier plate (91), the brake pads (9) being held in a form-fit on carrier horns (4, 5, 104, 105) of the brake carrier (1, 100) radially in relation to the axis of rotation of the brake disc on both the run-in side and the run-out side, **characterised in that** the brake carrier (1, 100) is configured according to any one of the preceding claims.

9. A disc brake according to claim 8, **characterised in that** only the action-side carrier horns (4, 5, 140, 150) have the guide contours (44, 54, 144, 154) for guiding the brake pad (9) into an insertion position (44, 54, 144, 154) to the side of the pad shaft.

## Revendications

1. Flasque (1, 100) de frein d'un frein à disque, pouvant être actionné pneumatiquement ou par moteur électrique, d'un véhicule utilitaire, comportant
- une partie (2, 120) de rattachement pour la fixation à un essieu de véhicule,
- au moins un puits de garniture pour la réception et l'appui d'au moins une garniture (9) de frein,
- dans lequel le puits de garniture est formé par une corne (4, 140) de flasque du côté de l'entrée, par une corne (5, 150) de flasque du côté de la sortie et par un pontet (3, 130) reliant la corne (4, 140) de flasque du côté de l'entrée et la corne (5, 150) de flasque du côté de la sortie,
- des parties, voisines des cornes (4, 5, 140, 150) du flasque, du pontet (3, 130) forment des surfaces (31, 32, 131, 132) d'appui pour l'appui radial de la au moins une garniture (9) de frein,
- dans lequel sur une surface (42, 52, 142, 152) latérale des cornes (4, 5, 140, 150) du flasque sont disposés, latéralement au puits de garniture, des contours (44, 54, 144, 154) respectifs de guidage pour le guidage de la garniture (9) de frein dans une position d'insertion, dans laquelle la garniture (9) de frein peut être insérée axialement, par rapport à l'essieu du véhicule, dans le puits de garniture entre les cornes (4, 5, 140, 150) du flasque,
**caractérisé en ce que**
- les contours (44, 54, 144, 154) de guidage des cornes (4, 5, 140, 150) du flasque d'un puits de garniture sont formés, de manière continue, les uns sur les autres, en direction du pontet (3, 130).

2. Flasque (1, 100) de frein suivant la revendication 1, **caractérisé en ce que** les surfaces (31, 32, 131, 132) d'appui, pour l'appui radial de la au moins une garniture (9) de frein, sont agrandies latéralement d'une partie (33) de montage, pour la limitation du mouvement de coulissement de la garniture de frein dans la position d'insertion latéralement au puits de garniture.

3. Flasque (1, 100) de frein suivant la revendication 1 ou 2, **caractérisé en ce que** les contours (44, 54, 144, 154) de guidage sont formés, sous la forme d'épaississement de matériau des cornes (4, 5, 140, 150) de flasque, sur les surfaces (42, 52, 142, 152) latérales des cornes (4, 5, 140, 150) de flasque.

4. Flasque (1, 100) de frein suivant l'une des revendications précédentes, **caractérisé en ce que** les contours (44, 54, 144, 154) de guidage ont chacun au moins une partie de guidage rectiligne.

5. Flasque (1, 100) de frein suivant la revendication 4, **caractérisé en ce qu'**une première partie de guidage rectiligne fait un angle avec le plan du côté (41, 51) intérieur des cornes (4, 5) du flasque, et une deuxième partie de guidage rectiligne est dans le plan du côté (41, 51) intérieur de la corne (4, 5) respective du flasque.

6. Flasque (1, 100) de frein suivant l'une des revendications précédentes, **caractérisé en ce que,** sur les côtés (41, 51) intérieurs respectifs des cornes (4, 5) du flasque sont formées des saillies (45, 55) pour l'arrêt radial de la garniture. (9) de frein par une plaque (91) de forme correspondante ayant des évidements (94) latéraux.

7. Flasque (1, 100) de frein suivant la revendication 6, **caractérisé en ce que,** en dessous des saillies (45, 55), est formé respectivement un logement (46, 56) de réception d'une saillie (95) respective de la plaque (91) du flasque de garniture, les contours (44, 54) de guidage se terminant respectivement à un bord latéral du logement (46, 56) respectif.

8. Frein à disque, pouvant être actionné pneumatiquement ou par moteur électrique, d'un véhicule utilitaire, comprenant un étrier de frein chevauchant un disque de frein et pouvant coulisser, des garnitures (9) de frein disposées des deux côtés du disque de frein dans un puits de garniture d'un flasque (1, 100) de frein, comprenant une plaque (91) de flasque de frein et une garniture de friction qui y est fixée, dans lequel les garnitures (9) de frein sont retenues du côté de l'entrée et du côté de la sortie, radialement par rapport à l'axe de rotation du disque de frein à complémentarité de forme sur les cornes (4, 5, 140, 150) du flasque (1, 100) de frein, **caractérisé en ce que** le flasque (1, 100) de frein est constitué suivant l'une des revendications précédentes.

9. Frein à disque suivant la revendication 8, **caractérisé en ce qu'**exclusivement les cornes (4, 5, 140, 150) du flasque du côté de l'action ont les contours (44, 54, 144, 154) de guidage, pour le guidage de la garniture (9) de frein, dans la position d'insertion latéralement au puits de garniture.
